(19) Europäisches Patentamt

European Patent Office

Office européen des brevets

(11) Publication number: **0 188 011**
**B1**

(12) **EUROPEAN PATENT SPECIFICATION**

(45) Date of publication of patent specification: **29.08.90**

(21) Application number: **85200032.2**

(22) Date of filing: **16.01.85**

(51) Int. Cl.⁵: **A 01 G 25/09**

(54) A sprinkling device with a plurality of sprinklers interconnected by a windable water hose.

(43) Date of publication of application:
**23.07.86 Bulletin 86/30**

(45) Publication of the grant of the patent:
**29.08.90 Bulletin 90/35**

(84) Designated Contracting States:
**DE FR GB**

(56) References cited:
**DE-B-1 236 851**
**DE-U-82 312 826**
**NL-A-7 700 624**
**US-A-2 811 388**
**US-A-3 899 132**

(73) Proprietor: **H.A.M. Schrijver B.V.**
**Van Dongenstraat 41**
**NL-8107 De Broekland (NL)**

(72) Inventor: **H.A.M. Schrijver B.V.**
**Van Dongenstraat 41**
**NL-8107 De Broekland (NL)**

(74) Representative: **Mommaerts, Johan Hendrik,**
**Dipl.-Phys.**
**Octrooibureau Lux Willem Witsenplein 4**
**NL-2596 BK Den Haag (NL)**

Courier Press, Leamington Spa, England.

EP 0 188 011 B1

## Description

For sprinkling large surfaces of agricultural, horticultural or grass land or the like, sprinkling devices are used comprising a flexible hose which is adapted to be wound on a reel, and is provided with a plurality of coupling pieces arranged at more or less regular distances, each of said coupling pieces being provided with a support means adapted to support the respective coup--ling piece in the operative position on the ground, and with a sprinkler which, during sprinkling, is directed upwards with its longitudinal axis directed transversely to the axis of the coupling piece and transversely to said support means, each sprinkler being mounted in its working position perpendicularly on a branch duct of its coupling piece (1) which is directed transversely to the axis of said coupling piece, said sprinkler being connected to each coupling piece, and being, in particular, adapted to emit an interrupted and swinging water jet.

Such devices are very suitable for sprinkling such land, and have the advantage that, after sprinkling a portion thereof, the whole device can be easily moved, and, as soon as sprinkling is no longer required, can be easily transported and stored.

A disadvantage of such devices is that, before winding, all the sprinklers are to be removed, since, otherwise, they might be damaged during winding and/or might damage the adjacent hose turns. When unwinding the sprinklers are to be mounted again. This not only requires relatively much work, but has, moreover, the drawback that the sprinklers are to be collected and stored separately, and that, furthermore, the couplings thereof must be well maintained for avoiding damage and attack which, otherwise, would lead to leakage or difficulties when mounting and removing said sprinklers.

It has already been proposed to connect the sprinklers to the coupling pieces by means of a rotatable coupling, so that the former, before winding, can be swung away by about 90°. Thereby the risk of being damaged is not yet removed, since the sprinklers still can contact adjacent hose turns, and, moreover, swinging them away during winding still requires relatively much work. Furthermore there is a risk that, in the case of a too loose coupling, the sprinklers will not remain in the operative position and/or the coupling starts leaking. Also these couplings require, therefore, much maintenance for ensuring that they will always satisfy the requirements.

A special embodiment of the last-mentioned sprinklers is described in NL—A 74 14 971, in which swinging the sprinklers into the operative position against spring action is effected by the water pressure. This obviates swinging the sprinklers upwards and downwards by hand indeed, but the assembly becomes still more complex, and the other objections remain.

The invention provides a spraying device of the above-mentioned kind, which does not have the objections of the known devices. To that end this device is characterised by the features of the second portion of claim 1.

Because of the fixed connection of the sprinklers, manufacturing and maintenance are simplified, and the fenders provide an effective shielding of the sprinklers so that mutual damage is avoided. These fenders can serve, at the same time, as supports for the sprinklers.

In order to reduce the dimensions of the whole assembly, the sprinkler, as in the case of the last-mentioned prior sprinkling devices, is connected to the coupling piece by means of a lateral branch pipe, so as to shield the sprinkler at one side by the coupling piece, said branch pipe being directed, in respect of said coupling piece, in such a manner that the connection thereof with the sprinkler is situated as closely as possible to a tangential plane to the coupling piece perpendicular to the axis of the sprinkler.

Preferably the branch pipe is formed by a hollow channel welded against the coupling piece, the interior of said channel communicating with said coupling piece by means of an aperture, the sprinkler being welded laterally in or on said channel, and also the fender or fender portions can be welded to said channel.

In particular said fenders comprise two halves situated at both sides of the sprinkler, said fender or fender halves, more particularly, being shaped as a substantially rectangular frame which, in particular, consists of bent tube or rod material.

The invention will be elucidated below in more detail by reference to a drawing, showing in:

Fig. 1 a front view of a part of a preferred embodiment of the device according to the invention; and

Fig. 2 a lateral view of the part shown in Fig. 1.

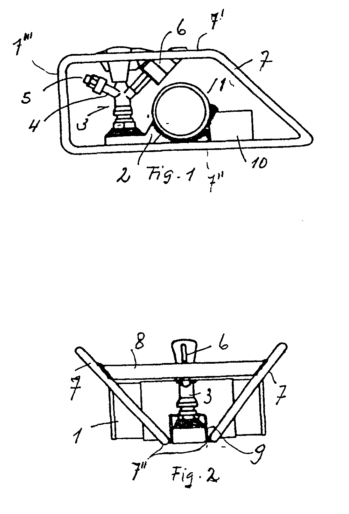

The device according to the invention comprises a windable hose, not shown, of the current type which, at regular distances, is interrupted by metallic coupling pieces, one of which is shown at 1 in the drawing, and which is formed by a tube section provided, at its extremeties, with hose connections of the current type not shown.

This coupling piece 1 is, at one side, provided with a branch pipe 2 to which a sprinkler 3 is connected, the longitudinal axis of the latter being perpendicular to the axis of the tube section, which sprinkler is provided with a rotatable head 4 with a spray nozzle 5 and a separately rotatable breaker 6.

Around the tube section 1 two frame-shaped fenders 7 are arranged, which, in the case shown, consist of bent rod or tube material, and are fixedly connected to the tube section 1, e.g. by means of welding. The two fenders 7 are interconnected by means of transverse rods 8.

The upper parts 7' of the two fenders shield the associated sprinkler 3 against contacting one hose turn to an adjacent layer of hose turns, so that mutually damaging is avoided.

The lower parts 7'' of these fenders 7 form together a support for the sprinkler 3 in the position of use. The distance between the upper parts 7' of both fenders 7 should be so that the breaker 6 can freely rotate, and the ejected water jet is not impeded.

The transversal parts 7''' interconnecting parts 7' and 7'' shield the sprinkler 3 against contact with an adjacent winding of the same layer.

The branch pipe 2 should, moreover, be arranged in such a manner that the sprinkler 3 will be situated as low as possible so as to keep the height of the fenders 7 accordingly small. In particular an aperture is made in the tube section 1 at its lower side, and, thereafter, a U-channel 9 is welded to the tube. The sprinkler 3 is, then, welded in or on this channel, the latter then being completely closed. This channel can be extended at the other side too, and, there, connect with a discharge valve 10. Moreover the fenders 7 are welded to the lateral sides of the channel 9 so that a strong connection is obtained.

Since, in this manner, the valve 10 communicates with the lowest part of the tube section 1, all the water can be discharged from the hose when winding the latter.

## Claims

1. A sprinkling device, comprising a flexible hose adapted to be wound on a reel and provided at more or less regular distances with a plurality of coupling pieces (1), each of said coupling pieces (1) being provided with a support means (7'') adapted to support the respective coupling piece (1) in the operative position on the ground, and with a sprinkler (3) which, during sprinkling, is directed upwards with its longitudinal axis directed transversely to the axis of the coupling piece (1) and transversely to said support means (7''), each sprinkler being in its working position perpendicularly on a branch duct (2) of its coupling piece (1) which is directed transversely to the axis of said coupling piece (1), said sprinklers (3) being adapted to emit an interrupted and swinging water jet, characterised in that each sprinkler (3) is connected to its branch duct (2) in a fixed perpendicular position in respect of the axis of said coupling piece (1), and in that each coupling piece (1) is provided with a pair of fenders (7) having substantially parallel upper portions (7') which are directed transversely to the axis of said coupling piece (1) and substantially parallel to said support means (7''), and at a transversal distance from said support means (7'') which substantially corresponds with the distance of the extremity of said sprinkler (3) so as to shield said sprinkler (3) from turns of a next layer of hose turns when wound on the reel, the mutual distance of said upper portions (7') being so that the water jet emitted by said sprinkler (3) is not interrupted thereby.

2. The device of claim 1, characterised in that said branch duct (2) is situated as closely as possible to said support means (7'').

3. The device of claim 1 or 2, characterised in that said fenders (7) are provided with at least one transversal portion (7''') joining said upper portion and shielding said sprinkler (3) against contact with an adjacent turn of the same layer of hose turns.

4. The device of claim 3, characterised in that the branch duct (2) is formed by a hollow channel (9) welded to the coupling piece (1), the interior of said channel communicating, by means of an aperture, with the coupling piece (1), the sprinkler (3) being welded laterally in or on this channel (9).

5. The device of any one of claims 1 ... 4, characterised in that the fenders (7) form the support means (7'') and have the shape of a substantially rectangular or trapezoidal frame made of tube or rod material.

## Patentansprüche

1. Sprengvorrichtung mit einem flexiblen Schlauch, der auf eine Trommel aufwickelbar und in mehr oder weniger gleichmäßigen Abständen mit einer Mehrzahl von Kupplungsstücken (1) versehen ist, wobei jedes Kupplungsstück eine Stützeinrichtung (7''), die das zugehörige Kupplungsstück in der Arbeitsposition auf dem Boden abstützen kann, sowie einen Sprenger (3) aufweist, der während des Sprengens aufwärts gerichtet ist, während seine Längsachse quer zur Achse des Kupplungsstücks (1) und quer zu der Stützeinrichtung (7'') verläuft, wobei jeder Sprenger in seiner Arbeitsposition senkrecht auf einer Abzweigleitung (2) seines Kupplungsstücks (1) montiert ist, die quer zur Achse dieses Kupplungsstücks verläuft, und wobei die Sprenger (3) einen unterbrochenen und schwingenden Wasserstrahl emittieren können, dadurch gekennzeichnet, daß jeder Sprenger (3) an seine Abzweigleitung (2) in einer fixierten senkrechten Position bezüglich der Achse des Kupplungsstücks (1) angeschlossen ist und daß jedes Kupplungsstück (1) mit einem Paar von Abweisern (7) versehen ist, die im wesentlichen parallele obere Abschnitte (7') aufweisen, welche quer zur Achse des Kupplungsstücks (1) und im wesentlichen parallel zu der Stützeinrichtung (7'') gerichtet sind sowie in einem Querabstand zu der Stützeinrichtung (7'') liegen, der im wesentlichen dem Abstand des Endes des Sprengers (3) entspricht, um den Sprenger (3) beim Aufwickeln auf die Rolle gegen die Windungen der nächsten Windungslage des Schlauches abzuschirmen, wobei der gegenseitige Abstand der oberen Abschnitte (7') so gewählt ist, daß der von dem Sprenger (3) emittierte Wasserstrahl dadurch nicht unterbrochen wird.

2. Vorrichtung nach Anspruch 1, dadurch gekennzeichnet, daß die Abzweigleitung (2) so nahe wie möglich an der Stützeinrichtung (7'') angeordnet ist.

3. Vorrichtung nach Anspruch 1 oder 2, dadurch gekennzeichnet, daß die Abweiser (7) mit mindestens einem Querabschnitt (7''') versehen sind, der die oberen Abschnitte miteinander verbindet und den Sprenger (3) gegen eine Berührung mit einer benachbarten Windung derselben Lage von Schlauchwindungen abschirmt.

4. Vorrichtung nach Anspruch 3, dadurch gekennzeichnet, daß die Abzweigleitung (2) von einem hohlen Kanal (9) gebildet wird, der an das Kupplungsstück (1) angeschweißt ist, wobei das Innere des Kanals über eine Öffnung mit dem Kupplungsstück (1) in Verbindung steht und wobei der Sprenger (3) seitlich in den Kanal (9) eingeschweißt oder an diesen angeschweißt ist.

5. Vorrichtung nach einem der Ansprüche 1 bis 4, dadurch gekennzeichnet, daß die Abweiser (7) die Stützeinrichtung (7'') bilden und die Form eines im wesentlichen rechtwinkligen oder trapezförmigen Rahmens aus Rohr- oder Stangenmaterial haben.

**Revendications**

1. Dispositif d'arrosage, comprenant un tuyau souple qui peut être enroulé sur une bobine et comporte à intervalles plus ou moins réguliers une pluralité de raccords (1), chacun desdits raccords (1) étant pourvu d'un support (7''), capable de supporter le raccord respectif (1) dans la position de travail sur le sol, et d'un organe d'arrosage (3) qui, pendant l'arrosage, est dirigé vers le haut de sorte que son axe longitudinal est transversal à l'axe du raccord (1) et transversal audit support (7''), chaque organe d'arrosage étant monté dans sa position de travail perpendiculairement sur un conduit de branchement (2) de son raccord (1) qui est dirigé transversalement à l'axe dudit raccord (1), les dits organes d'arrosage (3) étant prévus pour émettre un jet d'eau discontinu et oscillant, caractérisé en ce que chaque organe d'arrosage (3) est fixé à son conduit de branchement (2) dans une position perpendiculaire fixe par rapport à l'axe dudit raccord (1), et en ce que chaque raccord (1) est pourvu d'une paire d'éléments de protection (7) comportant des parties supérieures sensiblement parallèles (7') qui sont dirigées tansversalement à l'axe dudit raccord (1) et sensiblement parallèlement audit support (7''), et à une distance transversale dudit support (7'') qui correspond sensiblement à la distance de l'extrémité dudit organe d'arrosage (3) de façon à protéger ledit organe d'arrosage (3) des spires d'une couche suivante de spires du tuyau souple lorsqu'on enroule celui-ci sur la bobine, la distance mutuelle desdites parties supérieures (7') étant telle qu'elles n'interrompent pas le jet d'eau émis par ledit organe d'arrosage (3).

2. Dispositif suivant la revendication 1, caractérisé en ce que ledit conduit de branchement (2) est situé aussi près que possible dudit support (7'').

3. Dispositif suivant la revendication 1 ou 2, caractérisé en ce que lesdits éléments de protection (7) comportent au moins une partie transversale (7''') reliant lesdites parties supérieures et protégeant ledit organe d'arrosage (3) contre le contact avec une spire adjacente de la même couche de spires du tuyau.

4. Dispositif suivant la revendication 3, caractérisé en ce que le conduit de branchement (2) est formé par un profilé creux (9) soudé au raccord (1), l'intérieur du dit profilé communiquant au moyen d'un orifice avec le raccord (1), l'organe d'arrosage (3) étant soudé latéralement dans ou sur ce profilé (9).

5. Dispositif suivant l'une quelconque des revendications 1 à 4, caractérisé en ce que les éléments de protection (7) constituent le support (7'') et ont là forme d'un châssis sensiblement rectangulaire ou trapézoïdal fabriqué en tubes ou en barres.

Fig. 1

Fig. 2

1